# EUROPÄISCHE PATENTSCHRIFT

(11) **EP 1 140 387 B1**
(45) Veröffentlichungstag und Bekanntmachung des Hinweises auf die Patenterteilung: **13.11.2002**
(21) Anmeldenummer: 99968398.0
(22) Anmeldetag: 30.12.1999
(51) Int. Cl.: B21D 53/30, B21D 53/26, B21D 22/16

(54) **VERFAHREN ZUR HERSTELLUNG EINER LUFTREIFENFELGE**
METHOD FOR PRODUCING A RIM FOR A PNEUMATIC TYRE
PROCEDE POUR PRODUIRE UNE JANTE POUR PNEU

(30) Priorität: 30.12.1998 DE 19860732
(43) Veröffentlichungstag der Anmeldung: 10.10.2001
(73) Patentinhaber: WF-MASCHINENBAU UND BLECHFORMTECHNIK GMBH & CO. KG, D-48324 Sendenhorst (DE)
(72) Erfinder: FRIESE, Udo, D-59227 Ahlen (DE)
(74) Vertreter: Dantz, Jan Henning
(86) Internationale Anmeldenummer: EP9910469
(87) Internationale Veröffentlichungsnummer: WO00040350

(56) Entgegenhaltungen:
- EP-A- 0 205 867
- JP-A- 4 071 743
- US-A- 5 533 261
- US-A- 5 579 578

## Beschreibung

Die Erfindung bezieht sich auf ein Verfahren zur Herstellung einer Luftreifenfelge für Fahrzeuge.

Aus der DE 32 39 675 C2 ist ein Verfahren zur Herstellung eines einteiligen, aus einem Nabenteil und einer Luftreifenfelge bestehenden Fahrzeugrades in Leichtmetall bekannt geworden, bei dem aus einer Ronde durch einen Drückvorgang eine Radschüssel hergestellt wird und zur Bildung eines Felgenbettes der verbleibende Ringrand aufgespalten und durch einen nachfolgenden Verformungsvorgang die endgültige Felgenbettform mit verschieden breiten Schenkeln bei einer etwa gleichen Dicke erzeugt wird. In der Praxis hat sich gezeigt, dass bei der Herstellung solcher Luftreifenfelgen durch "Spalten" Unwuchtprobleme auftreten, die zur Unbrauchbarkeit der hergestellten Luftreifenfelge führen.

Es ist heute in der Praxis üblich, das Fahrzeugrad aus zwei Bauteilen herzustellen, nämlich einmal einer Felgenschüssel, die gegossen oder gewalzt werden kann, und dem eigentlichen Felgenbett, das im Drückverfahren hergestellt wird, wobei die beiden Bauteile dann miteinander verschweißt werden. Da die Felgenschüssel zusätzlich den ästhetischen Anforderungen der Käufer angepasst sein muss, das Felgenbett aber auf diese Anforderung keine Rücksicht nehmen muss, ist ein solches Verfahren auch kostengünstiger, als wenn das eigentliche Fahrzeugrad aus einem Teil hergestellt wird. Das Felgenbett kann stets gleich ausgebildet sein, die Felgenschüssel aber in kleineren Serien den Käuferwünschen entsprechend hergestellt werden.

Bei der Herstellung des Felgenbettes, das anschließend an die Felgenschüssel angeschweißt wird, wird heute in der Praxis so vorgegangen, dass von einer Ronde ausgegangen wird, die einen Außendurchmesser aufweist, der ausreichend ist, um nach Durchführen des außen an die Ronde angreifenden Drückverfahrens das Felgenbett zu erstellen, wobei also das Mittelloch einer solchen Ronde außerordentlich groß ist. Das bedeutet, da die Ronde aus einer Blechplatte ausgestanzt wird, durch das danach folgende Ausstanzen des Mittelloches einen hohen Materialaufwand, wobei der Bereich des ausgestanzten Mittelloches verworfen wird, so dass dadurch ein sehr kostspieliges und aufwendiges Verfahren bedingt wird.

Ferner ist aus der EP-A-0205867, siehe insbesondere Figur 7, ein Verfahren gemäß Oberbegriff von Anspruch 1 bekanntgeworden.

Der Erfindung liegt die Aufgabe zu Grunde, ein Herstellungsverfahren für eine Luftreifenfelge vorzuschlagen, bei welchem das Felgenbett im Drückverfahren hergestellt wird, die Felgenschüssel aber als Guß- oder Walzteil gefertigt wird, wobei aber der Materialaufwand für das Herstellen der Felgen gegenüber den in der Praxis bekannten Verfahren erheblich verringert werden kann.

Diese der Erfindung zugrunde liegende Aufgabe wird durch die Lehre des Hauptanspruchs gelöst.

Dabei kann der Rohling durch eine Ronde, ein Schmiedeteil, ein Gußteil, ein Drehteil oder dergleichen gebildet sein.

Ein Schmiedeteil kann beispielsweise durch Kaltverformung auf einer sogenannten Taumelpresse vorprofiliert sein, wodurch sich gegenüber den anderen genannten Rohlingsformen Vorteile ergeben.
So ist der Materialeinsatz eines solchen Schmiedeteiles gegenüber einer Ronde erheblich kleiner, da hier allein durch den Zuschnitt 30 bis 40% Materialabfall anfällt. Dieser Anteil ist bei einem auf einer Taumelpresse hergestellten Schmiedeteil um einen erheblichen Faktor kleiner. Durch den Einsatz eines solcherart hergestellten Rohlings werden die Herstellungskosten insoweit erheblich gesenkt, als zur Fertigung des Rohlings ein von einer Stange abgelängter Block eingesetzt wird, wozu sich insbesondere Leichtmetall eignet.

Da sowohl die Herstellung des vorprofilierten Rohlings als auch der Drückvorgang zur Herstellung des Felgenbettes eine Kaltumformung darstellen, ergeben sich daraus gleichfalls Vorteile gegenüber beispielsweise einem gegossenen Rohling. Aufgrund der sich daraus ergebenden durch Kaltverfestigung bedingten höheren Festigkeit können die Wandquerschnitte geringer dimensioniert werden, was sowohl die Herstellungskosten reduziert als auch günstigere Laufeigenschaften der Luftreifenfelge bewirkt.
In diesem Zusammenhang ist nach einer vorteilhaften Weiterbildung der Erfindung vorgesehen, die Wandstärke des Felgenbettes unmittelbar beim Andrücken des Rohlings an die Innenseite der Drückform oder anschließend entsprechend den Erfordernissen zu kalibrieren, d.h., die Wandstärken unterschiedlich dick auszubilden und/oder zu konturieren.

Die Erfindung ermöglicht ferner das Felgenbett einstückig herzustellen, so dass auf eine Verschweißung, wie sie bei einem aus Kostengründen zweiteiligen Felgenbett notwendig ist, verzichtet werden kann. In idealer Weise ist ein solches einteiliges Felgenbett aufgrund seiner Luftdichtheit insbesondere für schlauchlose Reifen geeignet.

Während zur Herstellung von bekannten Leichtmetallfelgen, an die hinsichtlich ihrer Beschaffenheit höchste Ansprüche gestellt werden, ca. 60 Arbeitsgänge erforderlich sind, ist eine Leichmetallfelge durch die Erfindung mit einem Bruchteil dieses Arbeitsaufwandes herstellbar.

Dem erfindungsgemäßen Verfahren ist zu eigen, dass von einem Rohling ausgegangen wird, dessen Außendurchmesser etwa dem Außendurchmesser der Felge entspricht, so dass die bisher auftretenden Materialverluste vermieden werden.

Nach einer vorteilhaften Weiterbildung der Erfindung ist vorgesehen, dass eine zwischen einer Hauptspindel und einem Gegenhalter einer Vorrichtung eingespannte Ronde, die als Rohling eingesetzt wird, an die als Hohlform ausgebildete Drückform durch ein Drückverfahren angelegt, d.h. von innen in die Hohlform angelegt wird, wobei beim Anlegen der Ronde an die Innenseite der Hohlform nicht nur die Ronde der Form der Hohlform angepasst wird, sondern gleichzeitig auch die Wandstärke der Ronde den Erfordernissen der Felgen entsprechend, wie erwähnt, kalibriert werden kann. Hierbei kann also die Wandstärke des gebildeten Felgenbettes ausgehend von einer Ronde, die eine einheitliche Materialstärke aufweist, über seine Länge gesehen unterschiedliche Wandstärken aufweisen, wobei eine relativ große Wandstärke im Bereich des hinteren Felgenhornes erforderlich ist und eine relativ große Wandstärke im Bereich der dem hinteren Felgenhorn abgewandten Randkante des Felgenbettes vorgesehen sein muß, während die Wandstärke zwischen diesen beiden Bereichen geringer sein kann.

Anschließend wird das so hergestellte Felgenbett mit der eigentlichen Felgenschüssel verschweißt. Nachteilig bei dieser Art des Verfahrens ist, dass beim Schweißen gewisse Unwuchterscheinungen auftreten können, die eine Nachbearbeitung erfordern.

Um diesen Nachteil zu vermeiden, wird gemäß einer Weiterentwicklung des Verfahrens vorgeschlagen, dass die Ronde, die zwischen Hauptspindel und Gegenhalter festgelegt ist, von innen an ein als Hohlform ausgebildetes Drückfutter angelegt wird, so dass ein Vorzug erstellt wird. Der Vorzug kann dabei eine über seine gesamte Länge gesehen gleiche Wandstärke aufweisen, die der Wandstärke der Ausgangsronde entspricht.

In einem zweiten Arbeitsgang wird dann dieser Vorzug mit der Felgenschüssel verschweißt und nunmehr diese Einheit aus Felgenschüssel und festgelegtem Vorzug zwischen einer Hauptspindel und einem Drückfutter eingespannt und durch ein Drückverfahren nunmehr der Vorzug zu dem eigentlichen Felgenbett verformt, wobei auch in diesem Fall das Drückfutter die Form des Felgenbettes aufweist, so dass durch Anlegen des Vorzuges die Form des Felgenbettes erzeugt wird, gleichzeitig aber auch durch Strecken der Vorzug in seiner Wandstärke den Erfordernissen entsprechend beim Herstellen des eigentlichen Felgenbettes kalibriert wird.

Es hat sich herausgestellt, dass durch diese Arbeitsweise die durch das Anschweißen des Vorzuges an der Felgenschüssel entstehenden möglichen Unwuchterscheinungen durch das eigentliche anschließend Drückverfahren ausgeglichen und eliminiert werden, so dass zwar durch dieses Verfahren eine mehrstufiges Arbeitsverfahren geschaffen wird, dass aber zu einer unmittelbar einsetzbaren Radfelge führt.

Auch dabei weist der Außenumfang der Ausgangsronde vor Herstellen des Vorzuges einen Außendurchmesser auf, der etwa dem Außendurchmesser des eigentlichen Felgenbettes entspricht, wobei sogar das Felgenbett eine größere Länge aufweisen kann als der Außendurchmesser der eigentlichen Ronde, da durch die Materialverdünnungen eine Streckung des Vorzuges erfolgt.

Der heute noch im Stand der Technik übliche hohe Materialaufwand wird auch bei diesem Verfahren vermieden, wobei generell gesagt werden kann, dass eine Materialersparnis gegenüber den in der Praxis bisher eingesetzten Verfahren von etwa 40 bis 50% erzielbar ist.

Weitere vorteilhafte Ausbildungen der Erfindung sind in den Unteransprüchen gekennzeichnet.

Das Verfahren wird nachfolgend anhand der beigefügten Zeichnungen erläutert. Es zeigen:
- Figur 1: im Schnitt einen Teil einer Radfelge mit Felgenschüssel und Felgenbett
- Figur 2: die Ausgangslage eines Verfahrens zur Herstellung eines Felgenbettes aus einer Ronde unter Verwendung einer Hohlform als Drückfutter gemäß einer Ausführungsvariante der Verfahrens
- Figur 3: die Herstellung eines Vorzuges durch Anlegen einer Ronde an die Innenseite eines Drückfutters gemäß einem weiteren Ausführungsbeispiel
- Figur 4: die Herstellung des Felgenbettes aus dem in Figur 3 dargestellten Vorzug, wobei der Vorzug bereits an der Felgenschüssel festgelegt ist
- Figuren 5 bis 7: verschiedene Verfahrensschritte bei der Herstellung eines Felgenbettes aus einem vorgeformten Rohling
- Figur 8: das so fertiggestellte Felgenbett in einem Teillängsschnitt
- Figur 9: ein weiteres, entsprechend den Verfahrensschritten gemäß der Fig. 5 bis 7 hergestelltes Felgenbett in einem Teillängsschnitt.

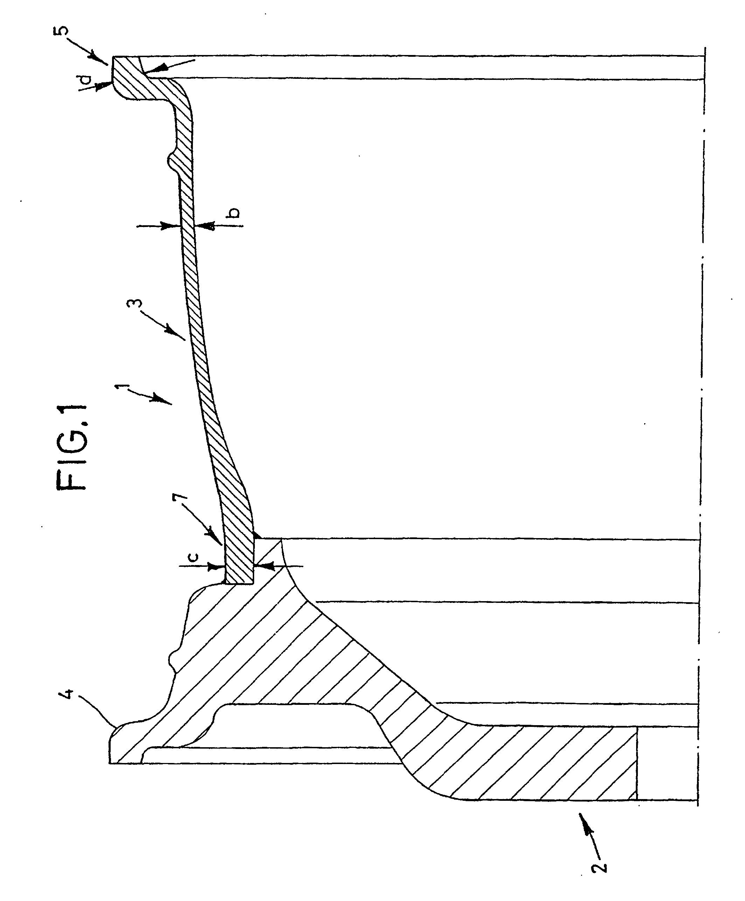

Figur 1 zeigt im Schnitt den Teil einer Luftreifenfelge 1, die im wesentlichen aus der eigentlichen Felgenschüssel 2 besteht und einem Felgenbett 3. Die Felgenschüssel 2 weist ein vorderes Felgenhorn 4 auf und das Felgenbett 3 ein hinteres Felgenhorn 5, wobei das Felgenbett 3 an seiner dem hinteren Felgenhorn 5 abgewandten Randkante 7 mit der Felgenschüssel fest verbunden, z.B. verschweißt ist.

Aus Figur 1 ist weiterhin deutlich zu ersehen, dass das Felgenbett 3 im Bereich der Randkante 7 und im Bereich des hinteren Felgenhornes 5 eine größere Wandstärke aufweist als im mittleren Teil, wobei diese Wandstärkenbereiche im Bereich der Randkante 7 mit c, im Bereich des hinteren Felgenhornes 5 mit d und im Bereich des mittleren Teiles des Felgenbettes 3 mit b bezeichnet sind.

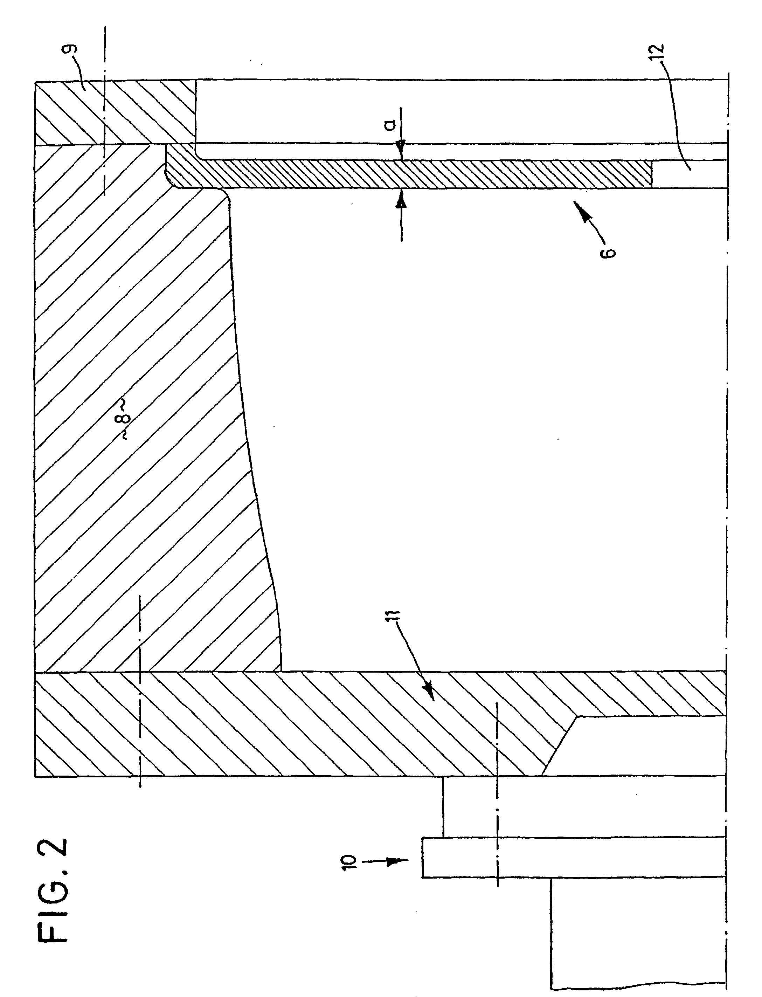

In der Figur 2 ist eine Ronde 6 erkennbar, deren Wandstärke mit a eingezeichnet ist und die zwischen einer Drückform 8 und einem Gegenhalter 9 festgelegt ist, wobei die Drückform 8 an einer Hauptspindel 10 festgelegt ist und von einer Planscheibe 11 getragen wird. In Figur 2 ist auch das in der Ronde 6 vorhandene Mittelloch 12 erkennbar.

Zur Herstellung des Felgenbettes 3 wird nunmehr in einem Drückverfahren die Ronde 6 an die Innenseite der die Form des Felgenbettes aufweisenden Drückform angelegt und dabei gestreckt, so dass der mittlere Bereich der so verformten Ronde 6 den dickeren Bereich b aufweisen kann, während die hintere Randkante 7 weiterhin die Stärke der Ronde 6, also a, aufweisen kann. Nach Herstellen des Felgenbettes 3 wird dieses an der Felgenschüssel 2 im Bereich der Randkante 7 des Felgenbettes 3 durch Schweißen festgelegt.

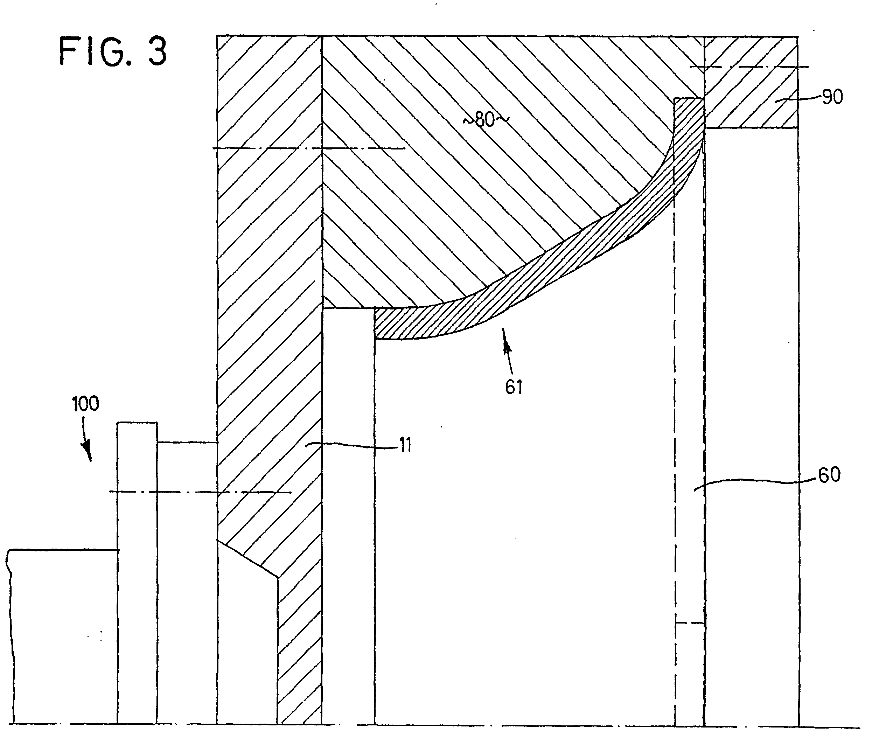

In Figur 3 ist eine Weiterentwicklung des Verfahrens dargestellt. Hier ist eine Ronde 60 gestrichelt dargestellt, die zwischen einem Gegenhalter 90 und einem Drückfutter 80 festgelegt ist, wobei das Drückfutter 80 von einer Planscheibe 11 und diese wiederum von einer Hauptspindel 100 getragen wird und dadurch in die umlaufende Umdrehung versetzt werden kann. Die gestrichelt dargestellt Ronde 60 wird dann durch ein Drückverfahren zu einem Vorzug 61 verformt, der in Figur 3 voll ausgezogen dargestellt ist.

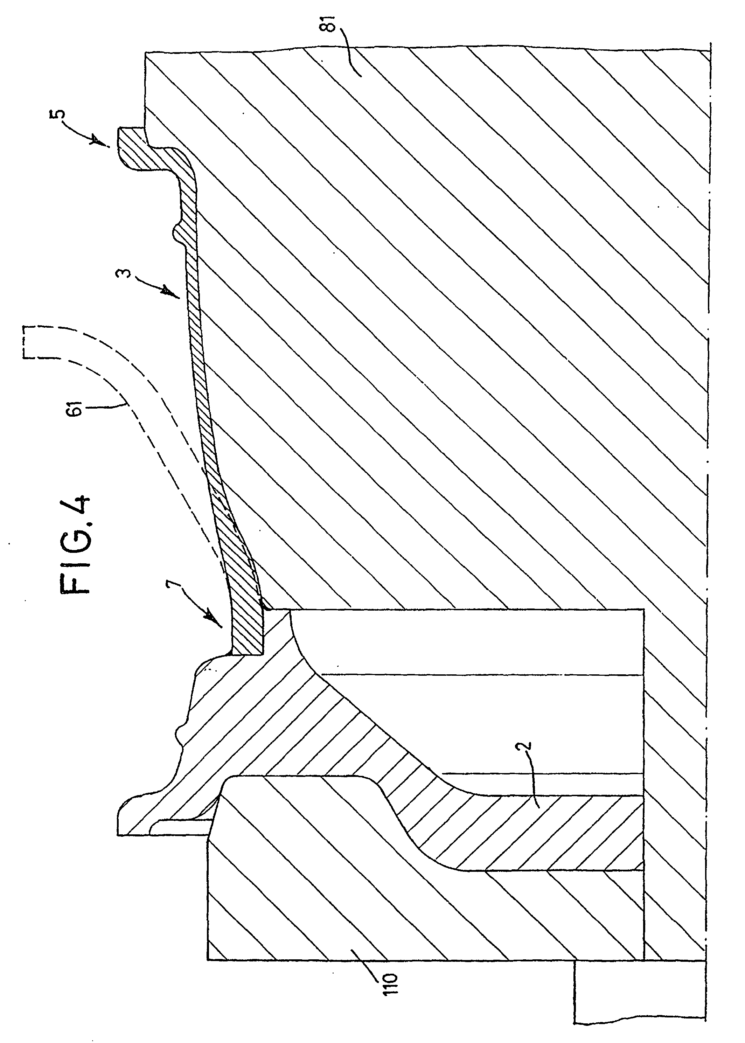

Dieser Vorzug 61 wird dann - wie in Figur 4 gestrichelt dargestellt - an der Felgenschüssel 2 beispielsweise durch Verschweißen festgelegt und dann die Felgenschüssel 2 an einer Aufnahmescheibe 110 festgelegt, die fest mit einem Drückfutter 81 verbunden ist. Durch Anwendung eines üblichen Druckverfahrens kann nunmehr der Vorzug 61 abgestreckt und so verformt werden, dass der die Form des Felgenbettes annimmt und auch hier ist es möglich, dass das hintere Felgenhorn 5 und die Randkante 7 eine Materialstärke aufweisen, die der Materialstärke der Ausgangsronde entspricht, während im mittleren Bereich des Felgenbettes dieses eine wesentlich geringere Materialstärke aufweist.

### Nur zu Verdeutlichung der Wandstärkenverhältnisse wird als Beispiel genannt:

Materialstärke der Ausgangsronde 6 beträgt 7mm, die Materialstärke des hinteren Felgenhornes 5 beträgt ebenfalls 7mm, die Materialstärke der Randkante 7 beträgt 6mm, während die Materialstärke des mittleren Bereichs des Felgenbettes, also im Bereich b 3mm betragen kann.

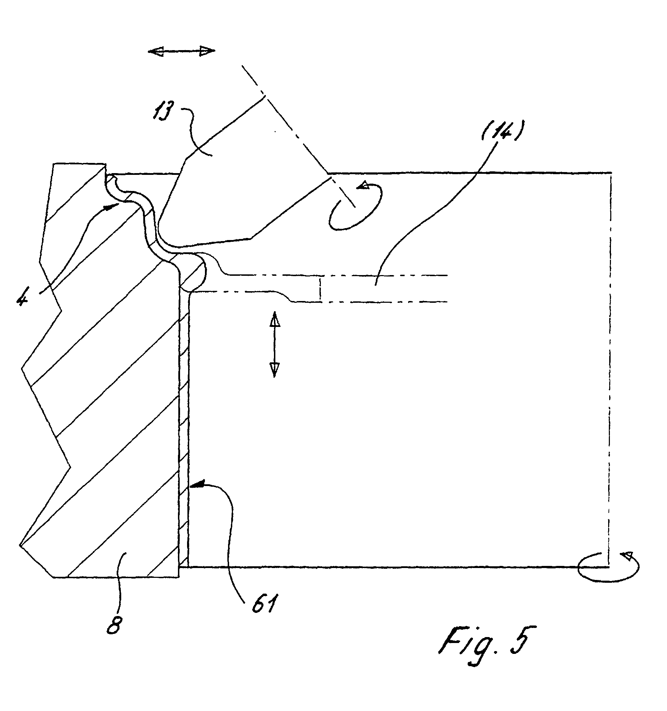

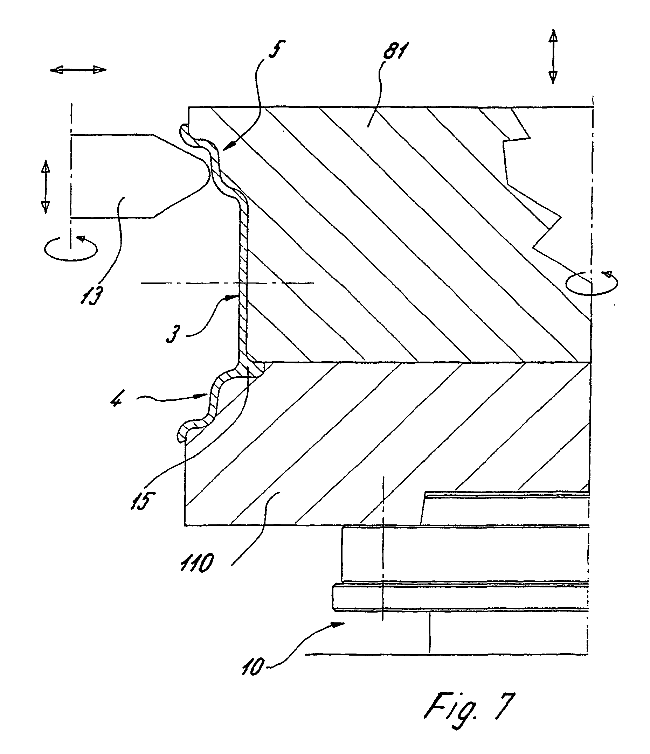

In den Figuren 5 bis 7 sind verschiedene Verfahrensstadien dargestellt, durch die ein schüsselartig vorgeformter Rohling 14, der beispielsweise auf einer Taumelpresse durch Kaltverformung vorgeformt wurde, zu einem einteiligen Felgenbett geformt wird.

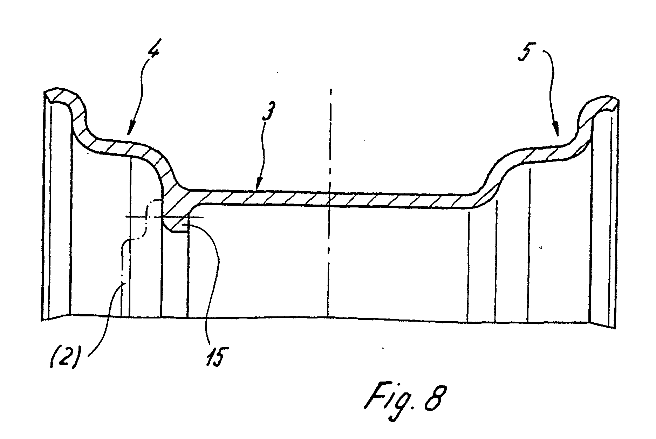

In der Figur 5 ist zu erkennen, dass der ringförmige vorgeformte Rohling 14 der strichpunktiert dargestellt ist, in die als Hohlform ausgebildete Drückform 8, die teilweise konturiert ist, eingelegt ist und durch mindestens eine rotierende Drückrolle 13, die sich, bezogen auf die rotationssymmetrische Drückform 8 axial und radial bewegt an die Innenwandung der Drückform 8 gedrückt wird, so dass ein Vorzug 61 entsteht. Dabei wird das vordere Felgenhorn 4 vollständig angeformt, wobei ein Anschlusskragen 15 vorgesehen ist, an den eine in der Figur 8 strichpunktiert dargestellte Felgenschüssel 2 angeschraubt werden kann.

Nach der Herstellung des Vorzugs 61 gemäß Figur 5 erfolgt die Anformung des hinteren Felgenhornes 5, wozu der Vorzug 61 mit seinem vorderen Felgenhorn 4 auf die Aufnahmescheibe 110 gesetzt wird, die im Aufnahmebereich dem vorderen Felgenhorn 4 in seiner Kontur angepasst ist.

Am gegenüberliegenden Ende wird der Vorzug 61 in der Drückform 8 gehalten und mittels der Drückrolle 13 gegen eine konturierte, als Schräge ausgebildete Aussenseite eines Gegenlagers (18) gedrückt, das als Rolle ausgebildet sein kann.

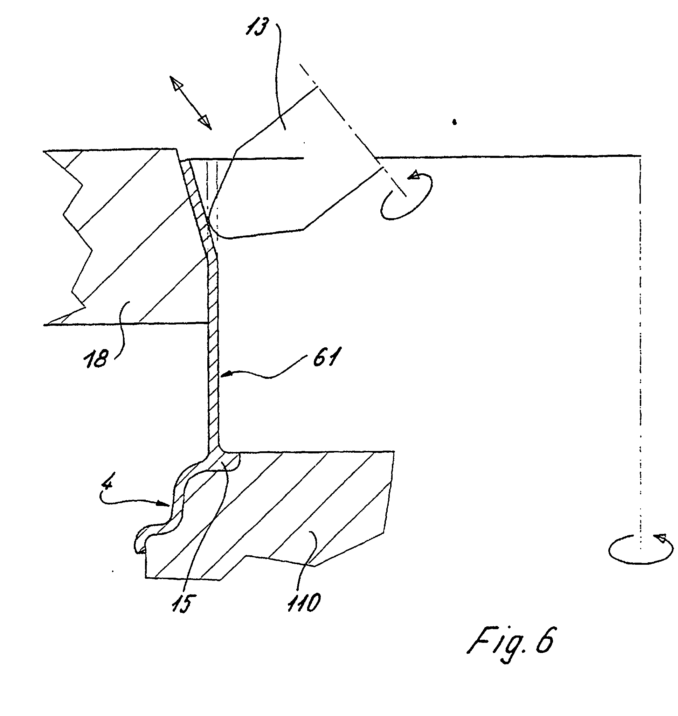

Bei dem nächsten Arbeitsschritt wird die Innenseite des Vorzugs 61, mit der entsprechend der Figur 6 angeformten Schräge durch ein inneres Drückfutter 81 abgestützt, das eine Kontur aufweist, an die die Schräge des Vorzugs 61 durch die Drückrolle 13 angepresst wird, wodurch das hintere Felgenhorn 5 entsprechend geformt wird.

Anstelle des gezeigten Rollens kann der Vorzug 61 endseitig auch durch Pressen geformt, d.h., aufgeweitet und/oder konturiert sein, wobei letzteres eine noch präzisere Fertigung ermöglicht.

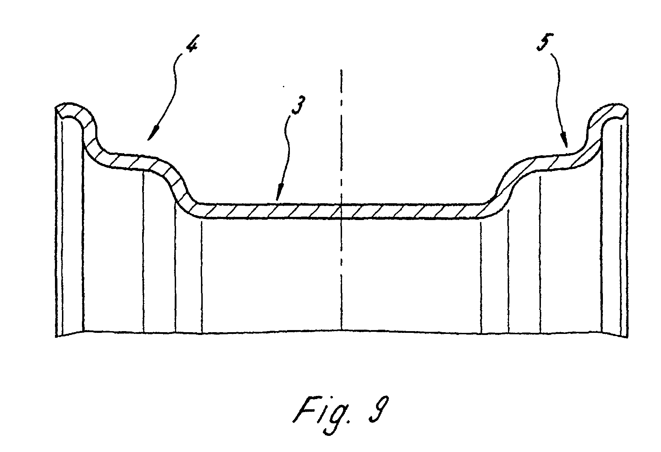

Wie erwähnt, zeigt die Figur 8 sehr deutlich die Einteiligkeit des kompletten Felgenbettes 3, durch die sich die bereits geschilderten Vorteile ergeben. Eine andere Ausbildung des Felgenbettes 3 ist in der Figur 9 gezeigt, das im übrigen in gleicher Weise herstellbar ist wie dies in den Figuren 5 bis 7 dargestellt und in der Beschreibung dazu erläutert ist.

Das Felgenbett gemäß der Figur 9 ist so ausgebildet, dass eine nicht dargestellte Felgenschüssel beispielsweise eingepresst werden kann oder mit dem Felgenbett 3 auf andere geeignete Art und Weise verbunden wird, beispielsweise durch Hartlöten oder dergleichen.

Selbstverständlich besteht auch die Möglichkeit ein Felgenbett 3, wie es in der Figur 1 dargestellt ist, aus einem vorgeformten Rohling herzustellen, wobei dann die Felgenschüssel 2 mit dem Felgenbett 3 verschweißt wird.

## Patentansprüche

1. Verfahren zur Herstellung einer Luftreifenfelge (1), bei dem aus einem etwa in Form einer Scheibe ausgebildeten, Rohling (6, 14) durch einen Drückvorgang ein Felgenbett (3) mit hinterem Felgenhorn (5) hergestellt wird, das anschließend an seiner dem hinteren Felgenhorn (5) abgewandten Seite mit einer Felgenschüssel (2) verbunden wird, **dadurch gekennzeichnet, daß** der Rohling als Ringscheibe ausgebildet ist und daß zur Herstellung des Felgenbettes (3) der Rohling (6, 14) in eine als Hohlform ausgebildete Drückform (8) eingelegt und durch mindestens eine Drückrolle (13) an die zumindest teilweise konturierte Innenseite der Drückform (8) gedrückt wird, und daß die Felgenschüssel (2) als Guß- oder Walzteil gefertigt ist.

2. Verfahren nach Anspruch 1, **dadurch gekennzeichnet, dass** zur Herstellung des Felgenbettes (3) der Rohling zunächst zu einem schüsselartigen Vorzug umgeformt wird.

3. Verfahren nach Anspruch 1, bei dem das Felgenbett (3) aus einer Ronde (6) mit Mittelloch hergestellt wird und anschließend an seiner dem hinteren Felgenhorn (5) abgewandten Randkante (7) mit der Felgenschüssel (2) verschweißt wird, **dadurch gekennzeichnet, dass** die zwischen der als Hohlform ausgebildete Drückform (8) und einem Gegenhalter (9) festgelegte Ronde (6) durch eine oder mehrere Drückrollen an die Innenseite der Drückform (8) angelegt, in ihrer Wandstärke den Erfordernissen entsprechend kalibriert und anschließend an der Felgenschüssel (2) durch Schweißen festgelegt wird.

4. Verfahren nach Anspruch 1, **dadurch gekennzeichnet, dass** der sich an den konturierten Bereich anschließende Teil des gebildeten Vorzuges (61) von seinem freien Ende her aufgeweitet und/oder ebenfalls konturiert wird.

5. Verfahren nach Anspruch 4, **dadurch gekennzeichnet, dass** die Aufweitung und/oder Konturierung durch Pressen und/oder Rollen erfolgt.

6. Verfahren nach Anspruch 4 oder 5, **dadurch gekennzeichnet, dass** der Vorzug (61) zwischen einer Aufnahmescheibe (110), die mit einer Hauptspindel (10) verbunden ist, und einem inneren Drückfutter (81) festgelegt wird und danach durch eine oder mehrere Drückrollen (13) an das innere Drückfutter (81) unter Bildung der Felgenform angelegt und in seiner Wandstärke den Erfordernissen entsprechend kalibriert wird.

7. Verfahren nach Anspruch 4 oder 5, **dadurch gekennzeichnet, dass** zur Bildung der Aufweitung und/oder Konturierung der Vorzug (61) außenseitig mittels einer Druckrolle (13) an ein Gegenlager (18), vorzugsweise in Form einer Gegenrolle gedrückt wird.

8. Verfahren nach Anspruch 1, bei dem das Felgenbett (3) aus einer Ronde (60) hergestellt wird und an seiner dem hinteren Felgenhorn (5) abgewandten Randkante (7) mit der Felgenschüssel (2) verschweißt wird, **dadurch gekennzeichnet, dass** aus der zwischen der als Hohlform ausgebildeten Drückform (80) und einem Gegenhalter (90) festgelegten Ronde (60) durch eine oder mehrere Drückrollen (13) durch Anlegen der Ronde (60) an ein äußeres Drückfutter (80) ein Vorzug (61) hergestellt wird, der Vorzug (61) an die Felgenschüssel (2) angeschweißt wird, anschließend die Felgenschüssel (2) mit dem Vorzug (61) zwischen einer Aufnahmescheibe (110), die mit einer Hauptspindel (10) verbunden ist, und einem inneren Drückfutter (81) festgelegt wird und der Vorzug (61) durch eine oder mehrere Drückrollen an das innere Drückfutter (81) unter Bildung der Felgenform angelegt und in seines Wandstärke den Erfordernissen entsprechend kalibriert wird.

9. Verfahren nach Anspruch 2, **dadurch gekennzeichnet, dass** der vorgeformte Rohling (14) durch Kaltverformen hergestellt wird, wobei die Seitenwand der Vorform in ihrer Kontur etwa der Konturierung des vorderen Felgenhorns (4) entsprechend geformt wird.

10. Verfahren nach Anspruch 6, **dadurch gekennzeichnet, dass** der Rohling (14) auf einer Taumelpresse hergestellt wird.

## Claims

1. A method for producing a rim for a pneumatic tyre (1), wherein a rim base (3) with a rear rim horn (5) is produced according to a chasing process out of a blank (6, 14) substantially in the form of disk, which rim base (3) is then connected with a rim dish (2) at its side opposite the rear rim horn (5), **characterised in that** the blank has the shape of an annular disk and that for producing the rim base (3) the blank (6, 14) is injected as a chasing form (8) formed as a hollow mould and pressed by at least one chasing roller (13) against the inner side, which is at least partially profiled, of the chasing form (8), and **in that** the rim dish (2) is provided as a cast or rolled part.

2. A method according to claim 1, **characterised in that** for producing the rim base (3), the blank is first drawn into a dish-like shape.

3. A method according to claim 1, wherein the rim base (3) is produced out of a round blank (6) and then welded with the rim dish (2) at its wheel edge (7) opposite the rear rim horn (5), **characterised in that** the round blank (6) held between the chasing form (8) provided as a hollow mould and a pressure pad (9) is pressed against the inner side of the chasing form (8) using one or several chasing rollers, then calibrated in its wall thickness to suit the requirements and finally welded to the rim dish (2).

4. A method according to claim 1, **characterised in that** the part of the first draw (61) connected to the profiled zone is widened and/or even profiled starting from its free end.

5. A method according to claim 4, **characterised in that** the widening and/or profiling process is performed by pressing and/or rolling.

6. A method according to claim 4 or 5, **characterised in that** the first draw (61) is held in position between a retaining plate (110) connected to a main spindle (10) and an inner chasing lining (81), then pressed against the inner chasing lining (81) by one or several chasing rollers (13) while machining the rim horn and then calibrated in its wall thickness to suit the requirements.

7. A method according to claim 4 or 5, **characterised in that** for the widening and/or profiling the first draw (61) is pressed against externally by a chasing roller (13) against a mating bearing (18) preferably in the form of a mating roller.

8. A method according claim 1, wherein the rim base (3) is produced out of a round blank (60) and welded with the rim dish (2) at its wheel edge (7) opposite the rear rim horn (5), **characterised in that** a first draw (61) is produced out of the round blank (60) held between the chasing form (80) provided as a hollow mould and a pressure pad (90) by one or several chasing rollers (13) pressing said round blank (60) against an external chasing lining (80), the first draw (61) is welded to the rim dish (2), then the rim dish (2) with the first draw (61) is held between a retaining plate (110) connected to a main spindle (10) and an inner chasing lining (81) and the first draw (61) is pressed by one or several chasing rollers against the inner chasing lining (81) while machining the rim horn and then calibrated in its wall thickness to suit the requirements.

9. A method according to claim 2, **characterised in that** the pre-formed blank (14) is cold formed, whereas the lateral wall of the profile of the pre-form is worked to match the profile of the front rim horn (4).

10. A method according to claim 6, **characterised in that** the blank (14) is produced on a wobble press.

## Revendications

1. Procédé de fabrication d'une jante (1) pour pneumatique, dans lequel on réalise, par un procédé d'emboutissage, à partir d'une ébauche (6, 14) réalisée sous la forme d'un disque, un lit de jante (3) avec come de jante (5) arrière, qui est relié ensuite, sur son côté tournè à l'opposé de la corne de jante (5) arrière, à une cuvette de jante (2), **caractérisé en ce que** l'ébauche est réalisée en tant que disque annulaire et **en ce que**, pour la fabrication du lit de jante (3), l'ébauche (6, 14) est placée dans une matrice à emboutir (8), réalisée sous la forme d'un moule creux, et est pressée par au moins un rouleau d'emboutissage (13) contre la face intérieure, au moins en partie profilée, de la matrice à emboutir (8), et **en ce que** la cuvette de jante (2) est fabriquée en tant que pièce moulée ou pièce laminée.

2. Procédé selon la revendication 1, **caractérisé en ce que** pour fabriquer le lit de jante (3), l'ébauche est d'abord déformée en une pièce prédéformée du genre cuvette.

3. Procédé selon la revendication 1, dans lequel le lit de jante (3) est fabriqué à partir d'un rond (6) à trou central puis est soudé, par son arête de bordure (7) tournée à l'opposé de la corne de jante (5) arrière, sur la cuvette de jante (2), **caractérisé en ce que** le rond (6), fixé entre la matrice d'ernboutissage (8) réalisée en tant que matrice creuse et un contre-support (9), est appliqué, par un ou plusieurs rouleaux d'emboutissage, contre la face intérieure de la matrice d'emboutissage (8), est calibré dans son épaisseur de paroi conformément aux exigences, puis est fixé par soudage sur la cuvette de jante (2).

4. Procédé selon la revendication 1, **caractérisé en ce que** la partie de la pièce prédéformée (61), qui fait suite à la zone profilée, est élargie depuis son extrémité libre et/ou également profilée.

5. Procédé selon la revendication 4, **caractérisé en ce que** l'élargissement et/ou le profilage s'effectuent par pressage et/ou roulage.

6. Procédé selon la revendication 4 ou 5, **caractérisé en ce que** la pièce prédéformée (61) est fixée entre un disque de réception (110), qui est relié à une broche principale (10), et un mandrin d'emboutissage (81) intérieur puis est appliquée, par un ou plusieurs rouleaux d'emboutissage (13), contre le mandrin d'emboutissage (81) intérieur avec formation de la forme de la jante et est calibrée dans son épaisseur de paroi conformément aux exigences.

7. Procédé selon la revendication 4 ou 5, **caractérisé en ce que** pour former l'élargissement et/ou le profilage, la pièce prédéformée (61) est pressée par son côté extérieur, au moyen d'un rouleau d'emboutissage (13), contre un contre-palier (18), de préférence sous la forme d'un contre-rouleau.

8. Procédé selon la revendication 1, dans lequel le lit de jante (3) est réalisé à partir d'un rond (60) et est soudé à la cuvette de jante (2), sur son arête de bordure (7) tournée à l'opposé de la corne de jante (5) arrière, **caractérisé en ce qu'**on réalise une pièce prédéformée (61) à partir du rond (60) fixé entre la matrice d'emboutissage (80), réalisée en tant que matrice creuse, et un contre-support (90), au moyen d'un ou de plusieurs rouleaux d'emboutissage (13), par application du rond (60) contre un mandrin d'emboutissage (80) extérieur, la pièce prédéformée (61) est soudée sur la cuvette de jante (2), ensuite la cuvette de jante (2) est fixée sur la pièce prédéformée (61), entre un disque de réception (110), qui est relié à une broche principale (10), et un mandrin d'emboutissage (81) intérieur, et la pièce prédéformée (61) est appliquée, au moyen d'un ou de plusieurs rouleaux d'emboutissage, contre le mandrin d'emboutissage (81) intérieur avec formation de la forme de la jante, et est calibrée dans son épaisseur de paroi conformément aux exigences.

9. Procédé selon la revendication 2, **caractérisé en ce que** l'ébauche (14) prédéformée est réalisée par déformation à froid, le contour de la paroi latérale de la préforme correspondant approximativement au profilage de la corne de jante (4) avant.

10. Procédé selon la revendication 6, **caractérisé en ce que** l'ébauche (14) est réalisée sur une presse oscillante.
